# EUROPÄISCHE PATENTANMELDUNG

(11) **EP 3 821 956 A1**
(43) Veröffentlichungstag der Anmeldung: **19.05.2021**
(21) Anmeldenummer: 20207339.1
(22) Anmeldetag: 13.11.2020
(51) Int. Cl.: A63B 55/10, A63B 55/60

(54) **GOLF-CADDY**

(30) Priorität: 15.11.2019 DE 102019130939; 15.11.2019 DE 202019106390 U
(71) Anmelder: TigerTecs GmbH, 78183 Hüfingen (DE)
(72) Erfinder: Urhahn, Christoph, 78183 Hüfingen (DE); Uhrhan, Barbara, 78183 Hüfingen (DE)
(74) Vertreter: Patentanwälte und Rechtsanwalt Weiß, Arat & Partner mbB

(57) **Zusammenfassung**

Golf-Caddy 1 mit zwei Rädern 27 und einer Griffstange 3 mit Handgriff 4, für den Transport von Eisen 39, Drivern 40, Puttern 41, sowie weiteren zum Golfspiel benötigter Ausrüstung oder einer Golfschlägertasche 37, wobei ein rechteckiger Rahmen 2 eine Griffstangenhalterung 5 mit einem Schraubelement für die Griffstange 3, eine Schlägerschaftklemme 33, eine obere Tasche 24, eine untere Tasche 25 sowie einen Klappauflagesteg 28 oder ein Einhängeauflagesteg 36 umfasst sind.

## Beschreibung

### Technisches Gebiet

Die Erfindung betrifft einen Golf-Caddy nach dem Oberbegriff des Anspruchs 1.

### Stand der Technik

Derartige Golf-Caddies sind bereits in vielfältiger Form und Ausgestaltung bekannt und gebräuchlich. So wird beispielsweise in der GB 2141674 A ein Wagen zum Transportieren von Golfschläger offenbart, welcher eine Vorrichtung zum Einklemmen von Golfschlägern umfasst.

Weiterhin ist die GM 2327642 A zu nennen. Hier wird ein Golf Trolley offenbart, welcher zusammenklappbar ist.

Ferner ist auf die GB 2240306 A hinzuweisen, in welcher ein Wagen offenbart wird, an dessen Aussenseiten Golfschläger eingelegt werden können.

Ein dazu sehr ähnlicher Golfwagen wird auch in der GB 2 396 304 A offenbart.

In der US 3,738,677 wird weiterhin ein Golfwagen vorgestellt, welcher über einzelne Lagerfächer für Eisen und einzelne Lagerröhren für Driver verfügt.

Eine weiterer Golfwagen aus der US D714,511 S verfügt ebenfalls über ähnliche Lagerfächer und Lagerröhren für einzelne Golfschläger.

Schließlich ist noch die GB 2 258 434 A zu nennen, welche einen zusammenklappbaren Golfwagen mit integrierter Sitzfläche beschreibt.

### Aufgabe der Erfindung

Die Aufgabe der vorliegenden Erfindung ist es, die Nachteile aus dem Stand der Technik zu überwinden. Insbesondere soll eine Golf-Caddy bereitgestellt werden, der es erlaubt ein halbes Schlägerset, welches aus sieben Golfschlägern besteht, zu transportieren. Dabei soll der Golf-Caddy sehr platzsparend zusammenklappbar sein, wobei die Golfschläger derart transportiert werden sollen, dass sie nicht aneinanderschlagen aber sofort zugriffsbereit sind. Der Klappmechanismus des Golf-Caddies soll weiterhin einfach und besonders schnell bedienbar sein, wobei eine Lagerung des zusammengeklappten Golf-Caddies auch im mit Golfschlägern beladenen Zustand in einer aufrecht stehenden Position möglich sein soll. Weiterhin soll eine Flexibilität bestehen die es zusätzlich erlaubt eine Golftasche bzw. ein Golfschlägertasche mit einem kompletten Schlägersatz (14 Schläger) zu transportieren.

### Lösung der Aufgabe

Zur Lösung der Aufgabe führen die Merkmale nach dem Anspruch 1.

Der erfindungsgemässe Golf-Caddy ist für 9-Loch-Runden nach Feierabend oder eine schnelle Runde unterwegs vorgesehen. Der erfindungsgemässe Golf-Caddy ist eine Kombination aus Schlägertasche und Trolley. Der erfindungsgemässe Golf-Caddy hält das Half-Set - 7 Schläger - gut sortiert, fest in Position und vermeidet das Gegeneinanderschlagen der Schlägerköpfe. Dies schont die Golfschläger und erlaubt ruhiges Golfen ohne "Geklapper". Der erfindungsgemässe Golf-Caddy passt zusammengeklappt mit flachstem Faltmaß in jeden Kofferraum eines PKWs. Durch schnelles und einfaches Aufklappen ist der erfindungsgemässe Golf-Caddy sofort einsatzbereit.

Im Gegensatz zu Golftaschen zeigen die Schlägergriffe bei dem erfindungsgemässen Golf-Caddy vorzugsweise nach oben, also in Richtung eines Handgriffes einer Griffstange der Golf-Caddys. Die Golfschläger können so direkt an den Schlägergriffen entnommen werden. Verschmutzte Schlägerköpfe müssen nicht angefasst werden. Drei Stege ermöglichen die Positionierung der unterschiedlichen Golf-Schläger auf engstem Raum. Die unten liegenden Schlägerköpfe sorgen für einen tiefen Schwerpunkt und einen stabilen Stand des Golf-Caddys auch an schrägen Lagen. Durch die robuste Konstruktion und die verwendeten Standard-Komponenten eignet sich der erfindungsgemässe Golf-Caddy für jedes Gelände.

Der erfindungsgemässe Golf-Caddy kann auf zwei leicht laufenden Rädern geschoben und gezogen werden, was bequemes Gehen erlaubt und einseitige Belastungen vermeidet. Sollen 18 Loch gespielt werden, bietet ein an dem Golf-Caddy anbringbarer Rucksack genügend Stauraum für Golfbälle, Golf-Tees, Getränke, Regenjacke und anderen benötigte Utensilien. Über einen solchen Rucksack und die Farbe der Schraubelemente kann der erfindungsgemässe Golf-Caddy individualisiert werden.

Der erfindungsgemässe Golf-Caddy ist der sportliche Zweit-Trolley, den man im Auto immer dabei hat. Somit ist man allzeit bereit für eine schnelle Runde mit den eigenen Golfschlägern. Der erfindungsgemässe Golf-Caddy ist ideal für alle, die gerne mit leichtem Gepäck unterwegs sind, sowie Jugendliche, Golfeinsteiger und er ist sehr komfortabel für Drei- und Fünf-Schläger-Turniere.

Der erfindungsgemässe Golf-Caddy bestehend aus einem rechteckigen Rahmen mit drei Stegen als Schlägerkopfauflage und einer oder mehreren Schlägerschaftklemmen zur Fixierung der Golfschläger an ihren Schlägerschäften.

Der erfindungsgemässe Golf-Caddy verfügt weiterhin über zwei am Rahmen befestigte und einklappbare Radstangen mit Rädern sowie über eine in einer Griffstangenhalterung teleskopierbare Griffstange.

Ein Abstand der drei Stege ist so gewählt, dass die Schläger auf kleinstem Raum angeordnet werden können, in einer oberen Tasche, welche zwischen dem ersten und dem zweiten Steg angeordnet ist, sind die Schlägerköpfe der Eisen. In einer unteren Tasche, welche zwischen dem zweiten und einer unteren Querstange angeordnet ist, werden Driver positioniert. Mit Drivern werden folgend alle Golfschläger mit einem großen ovalem Schlägerköpf bezeichnet, wobei insbesondre sogenannte Hölzer damit ebenfalls gemeint sein sollen. Zwischen dem zweiten und dritten Steg ist ein Putter platziert.

Die Grundversion des erfindungsgemässen Golf-Caddys ist für 7 Schläger (1 Putter, 4 Eisen, 2 Driver) ausgelegt. Durch die Anpassung der Breite des Rahmens kann die Anzahl der aufnehmbaren Schläger beliebig angepasst werden.

Die beiden Taschen für die Schlägerköpfe verhindern, dass die Schlägerköpfe zwischen den Stegen hindurch rutschen. An einem oder mehreren weiteren Stegen sind weitere Klemmeinrichtungen zur Fixierung weiterer Golfschläger angebracht.

Am Rahmen sind zwei Radstangen mit daran montierten Rädern über ein feststellbares Drehgelenk montiert. Für den Transport wird das Drehgelenk gelöst und die Radstangen können abgeklappt und an den Rahmen angelegt werden. Bei Bedarf können die Räder von den Radstangen demontiert werden.

Die Griffstange ist in der Griffstangenhalterung verschiebbar montiert und kann über eine dort angeordnete Klemmvorrichtung auf die gewünschte Länge eingestellt werden. Für den Transport kann die Griffstange eingeschoben oder komplett aus der Griffstangenhalterung herausgezogen werden.

Die Schlägeranordnung mit der Schlägerschaftklemme und der Klappmechanismus erlauben es, den erfindungsgemässen Golf-Caddy zum Transport im Auto oder zum Verstauen im Trolley-Schrank komplett mit Schlägern auf ein flachstes Klappmaß zusammenzufalten.

Dabei sind die Radstangenlängen so gewählt, dass der erfindungsgemässen Golf-Caddys zusammengeklappt auch im freien Raum hingestellt werden kann.

Der Klappmechanismus ist in bevorzugten Ausführungsbeispielen mittels Schnüren oder Drahtseile ergänzt werden, die so angeordnet sind, dass beim Ausziehen der Griffstange aus der Griffstangenhalterung die Radstangen mit den Rädern automatisch ausgeklappt werden und die Position der Radstangen über die Schnüre/Drahtseile fixiert werden. In diesem Fall genügt ein einfaches - nicht feststellbares - Drehgelenk für die Radstangen.

Für Bälle und sonstige Golf-Utensilien kann ein beliebiger Rucksack problemlos an dem Rahmen angehängt werden.

Unten am Rahmen an der unteren Querrahmenstange können Erweiterungen angebracht werden, die es erlauben einzelne oder mehrere Golf-Schläger auf klassische Weise - mit dem Schlägerkopf nach oben - einzulegen. Dies ist insbesondere für die empfindlichen Driver von Interesse, über deren Schlägerköpfe gerne noch eine separate Schutzkappe gestülpt wird. Die unterschiedlichen Erweiterungen können auch genutzt werden, um eine Golfball-Angel oder einen Regenschirm anzubringen.

Soll es dann doch einmal mit dem kompletten Schlägerset (max. 14 Schläger) auf die Golfrunde gehen, kann an erfindungsgemässen Golf-Caddy eine weitere Vorrichtungen, nämlich ein Einhängeauflagesteg angebracht werden, mit welchem eine normale Golftasche auf den Golf-Caddy montiert werden kann.

Somit bietet der Golf-Caddy verschiedene Nutzungsvariante je nach Bedarf des Golfers.

Der erfindungsgemässe Golf-Caddy eignet sich sowohl für den Transport von Eisen, Drivern/Hölzern und Puttern, sowie für weitere zum Golfspiel benötigter Ausrüstung, wie zum Beispiel Ballangeln oder dergleichen. Vorzugsweise wird hierbei ein halbes Golfschlägerset mit sieben Schlägern mitgeführt, es können aber auch 14 Schläger mitgeführt werden, wenn die Schlägerschaftklemme und der Rahmen entsprechend größer ausgeführt sind. Alternativ zu den Schlägern kann aber auch eine Golfschlägertasche auf dem erfindungsgemässen Golf-Caddy mitgeführt werden, dazu ist in bevorzugten Ausführungsformen an dem rechteckigen Rahmen neben der oberen Tasche und der unteren Tasche ein Klappauflagesteg angeordnet.

Dieser Klappauflagesteg verfügt über eine Anwinklung und eine Querstrebe und ist und über ein erstes Klappscharnier, welches in einem ersten unteren Verbindungselement angeordnet ist und über eine zweites Klappscharnier, welches in einem zweiten unteren Verbindungselement angeordnet ist, klappbeweglich mit dem Rahmen verbunden.

Mit klappbeweglich ist gemeint, dass der Klappauflagesteg für die Aufnahme einer Golfschlägertasche von dem Rahmen abgeklappt werden kann, so dass dieser in einer ausgeklappten Position ca. in einem 90 Grad Winkel zu dem Rahmen positioniert ist. Dadurch ist eine Aufnahme einer Golfschlägertasche einfach möglich.

Sollen dann in einer weiteren Golfrunde nur sieben oder weniger Golfschläger auf dem erfindungsgemässen Golf-Caddy transportiert werden, so wird die Golfschlägertasche von dem Golf-Caddy entnommen und der Klappauflagesteg, auf welchem die Golfschlägertasche positioniert war, eingeklappt.

Eingeklappt bedeutet dabei, dass es die beiden Klappscharniere, welche jeweils in den unteren beiden Verbindungselementen des Rahmens integriert sind, erlauben, den Klappauflagesteg in Richtung des Rahmens einzudrehen, wobei dann diese eingedrehte Position beibehalten wird und erst durch die Überwindung einer angemessenen Kraft es wieder möglich ist den Klappauflagesteg wieder auszuklappen.

In der eingeklappten Position liegt der Teil des Klappauflagestegs, der als vorderer Teil bezeichnet werden kann und der Querstrebe gegenüber liegt, zwischen der ersten und der zweiten Rahmenstange des Rahmens. Die Querstrebe, welche im Bereich der Anwinklung angeordnet ist, liegt in der eingeklappten Position hingegen nicht zwischen den beiden Rahmenstangen. Die Anwinklung beschreibt eine um ca. 90 Grad ausgebildete Winkelform des Klappauflagestegs.

Um Driver oder andere Golfschläger in der unteren Tasche zu positionieren, werden sie durch den eingeklappten Klappauflagesteg hindurchgeführt, wobei durch die Querstrebe eine zusätzliche Fixierung der dort positionierten Golfschläger erfolgt. Dabei können die Golfschläger zudem mit ihren Griffstücken nach unten angeordnet werden, wobei die Griffstücke der Golfschläger dann auf der unteren Querrahmenstange aufliegen und dort durch die Querstrebe gehalten werden.

In einer weiteren Ausführungsform des erfindungsgemässen Golf-Caddys ist der Einhängeauflagesteg umfasst, wobei der Einhängeauflagesteg über Haken, die aus ihm hervorgehen, an dem dritten Steg des Rahmens einhängbar ist.

Der Einhängeauflagesteg erfüllt die gleich Aufgabe wie der Klappauflagesteg, nur dass dieser nicht fest mit dem Golf-Caddy verbunden ist. Der Einhängeauflagesteg wird, falls er für die Aufnahme einer Golfschlägertasche auf den erfindungsgemässen Golf-Caddy benötigt wird, über seine zwei aus ihm hervorgehenden Haken an dem dritten Steg eingehängt. Ebenfalls wie der Klappauflagesteg ist der Einhängeauflagesteg auch um ca. 90 Grad abgeknickt, so dass er in einer an dem dritten Steg eingehängten Position eine zu dem Rahmen orthogonale ausgerichtete Auflagemöglichkeit für die Golfschlägertasche bildet. Besonders vorteilhaft ist dabei, dass der Einhängeauflagesteg jederzeit mit einem Handgriff von dem Golf-Caddy entnommen werden kann, wenn es nicht notwendig sein sollte eine Golfschlägertasche zu transportieren. Zudem wird dadurch das Gesamtgewicht des Golf-Caddys weiter reduziert.

Weitere Vorteile des erfindungsgemässen Golf-Caddys ergeben sich durch eine besondere Verspannung mittels Drahtseilen oder anderen entsprechend geeigneten und strapazierfähigen Seilen. Dabei sind eine erste und eine zweite Griffstangen-Radverbindungselement-Verspannung, eine erste und eine zweite Erster-Steg-Radverbindungselement-Verspannung und eine erste und eine zweite diagonale Erster-Steg-Radverbindungselement-Verspannung umfasst.

Diese Verspannungen erlauben es auf einfachste Weise den erfindungsgemässen Golf-Caddy einsatzbereit zu machen, ihn also aus einem zusammengeklappten Zustand in einen einsatzfähigen ausgeklappten Zustand zu bringen. Dazu wird ein Schraubelement an der Griffstangenhalterung gelöst, so dass die Griffstange frei teleskopierbar ist. Wird dann die Griffstange in Richtung ihres Handgriffes aus der Griffstangenhalterung gezogen, werden die einzelnen o.g. Verspannungen gespannt, wodurch sich die beiden Radstangen mit den Rädern von dem Rahmen Abspreizen und die ausgeklappte Position einnehmen. Danach wird über die Verschraubung der Griffstangenhalterung die Griffstange in der ausgezogenen Position fixiert. Optional können die beiden Drehgelenke, welche die Radstangen mit dem Rahmen drehbeweglich verbinden ebenfalls an der gewünschten Position fixiert und bei Bedarf auch wieder gelöst werden.

An dem Rahmen des erfindungsgemässen Golf-Caddy sind das erstes Drehgelenk und das zweites Drehgelenk angeordnet. Das erste Drehgelenk verbindet drehbeweglich, und an jeder Position reversibel feststellbar, die erste Radstange mit dem Rahmen, das zweite Drehgelenk verbindet, ebenfalls an jeder Position reversibel feststellbar, die zweite Radstange mit dem Rahmen. Die reversible Feststellbarkeit wird über ein jeweils umfasstes Schraubelement ermöglicht, wobei über eine Spann- und/oder Drehbewegung die Verbindung innerhalb des Drehgelenks angezogen und festgestellt, oder gelockert und beweglich gemacht werden kann.

Der erfindungsgemässe Golf-Caddy umfasst weiterhin zwei Räder. Ein Rad ist über ein erstes Radverbindungselement mit der ersten Radstange und ein zweites Rad ist über ein zweites Radverbindungselement mit der zweiten Radstange verbunden. Beide Radverbindungselemente weisen jeweils einen Klickmechanismus auf. Dieser erlaubt es auf vorteilshafte Weise die Räder von den Radstangen bzw. den Radverbindungselementen abzunehmen. Dazu ist lediglich ein Knopf einzudrücken, so dass die Räder freigegeben werden. Die Räder können durch einfaches ansetzen an die Radverbindungselemente und die Überwindung eines entsprechenden Widerstandes des Klickmechanismus, wieder mit dem erfindungsgemässen Golf-Caddy verbunden werden. Natürlich sind unterschiedliche Ausführungen des Klickmechanismus vorgesehen, die jedoch alle auf ähnliche und insbesondere einfache Weise die Demontage bzw. Montage der Räder an den Golf-Caddy erlauben.

Weiterhin verfügt der erfindungsgemässe Golf-Caddy in bevorzugten Ausführungsformen an seinem Rahmen über einen Doppelerweiterung oder eine erste Erweiterung und/oder eine zweite Erweiterung.

Die Doppelerweiterung ist beidseits an dem ersten unteren Verbindungselement und dem zweiten unteren Verbindungselement angeordnet und verläuft mit seiner Brücke parallel zu der Querrahmenstange.

Die Doppelerweiterung verfügt weiterhin über zwei becherförmige Aufnahmen, in die Griffstücke von Golfschlägern oder auch Griffe von Ballrückholern oder dergleichen aufgenommen werden können. Die Brücke erlaubt es weitere Golfschläger mit Ihren Griffstücken anzuordnen, wobei die Griffstücke der Golfschläger dann auf der unteren Querrahmenstange aufliegen und dort durch die Brücke gehalten werden. Durch die Doppelerweiterung ist es möglich die zu transportierenden Golfschläger nach Wunsch auch mit den Schlägerköpfen in Richtung des Handgriffes auszurichten, so wie es der Fall bei der Anordnung der Schläger in einer klassischen Golfschlägertasche ist.

Die erste und zweite Erweiterung stellten jeweils eine becherförmige Aufnahme wie bei der Doppelaufnahme dar, jedoch ist keine Brücke vorhanden. Die beiden Erweiterungen können zusätzliche Schläger oder andere Utensilien wie Ballrückholer aufnehmen, oder gewährleisten, dass zum Beispiel Driver mit Ihrem Schlägerkopf in Richtung des Handgriffes auf dem Golf-Caddy platziert werden können. Dies ist insbesondere dann Vorteilhaft, wenn der Driver mit einem strumpfförmigen Schoner bezogen wird.

Der erfindungsgemässe Golf-Caddy umfasst weiterhin zwei Taschen, die zur Aufnahme der Schlägerkopfe dienen und lästiges Geklapper und aneinanderschlagen dieser Schläger beim Transport reduzieren. Dazu können die Taschen an der Seite an der sie die Schlägerköpfe aufnehmen auch mit einer speziellen Antirutschbeschichtung beschichtet sein. Die beiden Taschen bestehen aus einem flexiblen Kunststoffgewebe, könne aber auch aus einem geeigneten Textilgewebe oder einem Gummi hergestellt sein.

Die obere Tasche ist einerseits an dem ersten Steg und andererseits an dem zweiten Steg angeordnet und im Vergleich zu der zweiten Tasche, die einerseits an dem zweiten Steg und andererseits einer unteren Querrahmenstange angeordnet ist, etwas kleiner. Dies ist dadurch begründet, dass der Abstand zwischen dem ersten Steg und dem zweiten Steg kleiner ist als der Abstand zwischen dem zweiten Steg und dem unteren Querrahmen. Dies ermöglicht es jedoch eine separate Anordnung der Schlägerköpfe von Eisen und Drivern. Da die Schlägerköpfe der Driver größer als die der Eisen sind und die Driver meist deutlich längere Schlägerschäfte aufweisen, sind die Driver in der größeren unteren Tasche angeordnet. Die Schlägerköpfe der Eisen sind hingegen in oberen und etwas kleineren Tasche anzuordnen. Natürlich kann auch eine andere Anordnung der mitgeführten Golfschläger erfolgen.

Der dritte Steg ist freiliegend und mit keiner der Taschen verbunden. Er dient dazu den Putter aufzunehmen, so dass dieser, da er besonders Stoß- und Kratzerempfindlich ist, nicht an die anderen Golfschläger anstoßen kann.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: einen erfindungsgemässen Golf-Caddy 1;
- Figur 2: einen erfindungsgemässen Golf-Caddy 1 mit Blick auf Verspannungen 30, 31 und 32;
- Figur 3: einen erfindungsgemässen Golf-Caddy 1 mit einer Doppelerweiterung 34;
- Figur 4: einen erfindungsgemässen Golf-Caddy 1 mit einer Erweiterung 35;
- Figur 5: einen erfindungsgemässen Golf-Caddy 1 mit einer Erweiterung 35.1 und einer Erweiterung 35.2;
- Figur 6: einen erfindungsgemässen Golf-Caddy 1 mit einem Einhängeauflagesteg 36;
- Figur 7: einen erfindungsgemässen Golf-Caddy 1 mit einem Klappauflagesteg 28 im eingeklappten Zustand;
- Figur 8: einen erfindungsgemässen Golf-Caddy 1 mit einem Klappauflagesteg 28 im ausgeklappten Zustand;
- Figur 9: einen erfindungsgemässen Golf-Caddy 1 nach Figur 7 mit Golfschlägern in einheitlicher Ausrichtung;
- Figur 10: einen erfindungsgemässen Golf-Caddy 1 nach Figur 7 mit Golfschlägern in uneinheitlicher Ausrichtung;
- Figur 11: einen erfindungsgemässen Golf-Caddy 1 nach Figur 7 mit einer Golfschlägertasche 37;
- Figur 12: einen erfindungsgemässen Golf-Caddy 1 nach Figur 3 mit Golfschlägern in uneinheitlicher Ausrichtung;
- Figur 13: einen erfindungsgemässen Golf-Caddy 1 nach Figur 2 mit Golfschlägern in einheitlicher Ausrichtung;
- Figur 14: einen erfindungsgemässen Golf-Caddy 1 nach Figur 4 mit Golfschlägern in uneinheitlicher Ausrichtung;
- Figur 15: einen erfindungsgemässen Golf-Caddy 1 nach Figur 6 mit einer Golfschlägertasche 37;
- Figur 16: einen erfindungsgemässen Golf-Caddy 1 nach Figur 13 in einer seitlichen Ansicht und einem zusammengeklappten Zustand;
- Figur 17: einen erfindungsgemässen Golf-Caddy 1 nach Figur 16 in einer seitlichen Ansicht und einem zusammengeklappten Zustand ohne Räder 27;
- Figur 18: einen erfindungsgemässen Golf-Caddy 1 nach Figur 13 in einer seitlichen Ansicht und einem weiteren zusammengeklappten Zustand;
- Figur 19: einen erfindungsgemässen Golf-Caddy 1 nach Figur 17 in einer frontalen Ansicht und einem zusammengeklappten Zustand ohne Räder 27;

### Ausführungsbeispiel

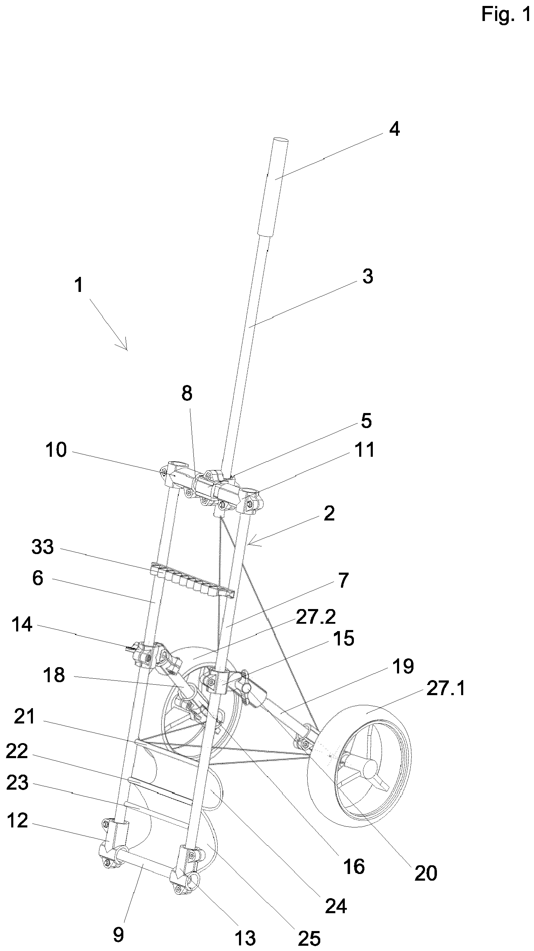

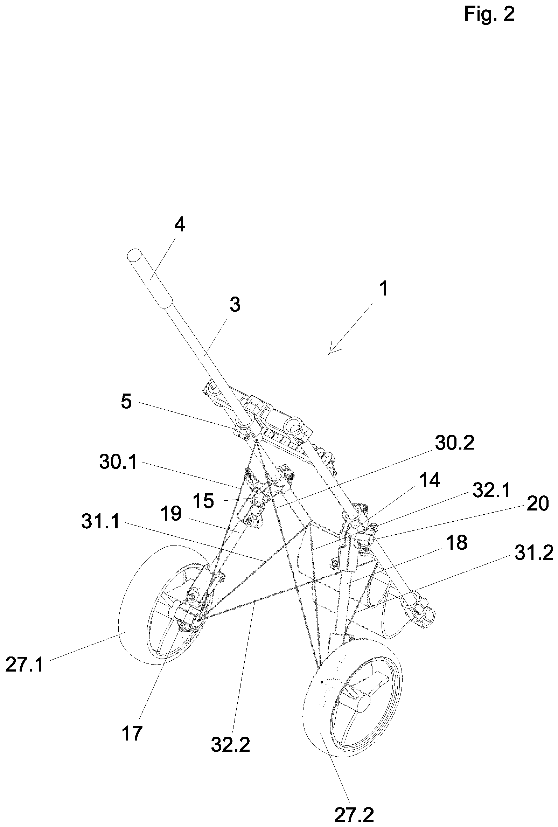

In Figur 1 und 2 ist ein erfindungsgemässer Golf-Caddy 1 dargestellt. Der erfindungsgemässe Golf-Caddy 1 weist einen rechteckigen Rahmen 2 auf, welcher sich aus einer ersten Längsrahmenstange 6 und einer gegenüberliegenden zweiten Längsrahmenstange 7 sowie einer oberen Querrahmenstange 8 und einer dazu gegenüberliegenden unteren Querrahmenstange 9 aufbaut.

Die obere Querrahmenstange 8 ist mit der ersten Längsrahmenstange 6 über ein erstes oberes Verbindungselement 10 und mit der zweiten Längsrahmenstange 7 über ein zweites oberes Verbindungselement 11 verbunden. Im Gegensetz zu der unteren Querrahmenstange 9, welche in ihrem Querschnitt rund ist und einem Rundrohr entspricht, ist die obere Querrahmenstange 8 als im Querschnitt rechteckiges Vierkantrohr ausgebildet. Diese Rechteckform ist insbesondere für eine Griffstangenhalterung 5 und deren einfache Befestigung an der oberen Querrahmenstange 8 zwischen dem ersten oberen Verbindungselement 10 und dem zweiten oberen Verbindungselement 11 wesentlich.

Die untere Querrahmenstange 9 ist mit der ersten Längsrahmenstange 6 über ein erstes unteres Verbindungselement 12 und mit der zweiten Längsrahmenstange 7 über ein zweites unteres Verbindungselement 13 verbunden.

Über ein erstes Drehgelenk 14 ist eine erste Radstange 18 mit der ersten Längsrahmenstange 6 verbunden. Über ein zweites Drehgelenk 15 ist gegenüber eine zweite Radstange 19 mit der zweiten Längsrahmenstange 7 verbunden. Das erste und das zweite Drehgelenk 14 und 15 verfügen über ein einstellbares Gelenk, über welches ein Winkel zwischen den Längsrahmenstangen 6 und 7 und den Radstangen 18 und 19 eingestellt werden kann. Für die Einstellung dieses Winkels verfügen die beiden Drehgelenk 14 und 15 jeweils über eine Schraubelement 20.

An die erste Radstange 18 schließt sich ein erstes Radverbindungelement 16 und an die zweite Radstange 19 ein zweites Radverbindungselement 17 an. Das erste und das zweite Radverbindungselement 16 und 17 ermöglichen die Aufnahme jeweils eines Rades 27.1 und 27.2. Die Räder 27.1 und 27.2 können über einem Klickmechanismus 46 händisch mit dem ersten bzw. dem zweite Radverbindungselement 16/17 verbunden und auch wieder gelöst werden.

An der Griffstangenhalterung 5 ist eine Griffstange 3 angeordnet, wobei die Griffstangenhalterung 5 die Griffstange 3 umschließt. Die Griffstange kann an gewünschter Position durch die Griffstangenhalterung 5 und einen dort befindlichen Schnellspannmechanismus, oder ein Schraubenelement, welche in den Abbildungen nicht dargestellt sind, fixiert und bei Bedarf auch wieder gelöst werden. Die Griffstange 3 verfügt über einen Handgriff 4. Die Griffstange 3 ist in der Griffstangenhalterung 5 teleskopierbar angeordnet. Abgebildet ist eine ausgefahrene Position der Griffstange 3. Bei einer eingefahrenen Position der Griffstange 3 ist diese, ausgehend von der Griffstangenhalterung 5, bis zum Handgriff 4 in Richtung der unteren Querrahmenstange 9 eingeschoben.

Zwischen der ersten Rahmenstange 6 und der zweiten Rahmenstange 7 sind ein erster Steg 21, ein zweiter Steg 22 und ein dritter Steg 24 angeordnet. Dabei sind die Stege 21, 22 und 23 in einem unteren Bereich zwischen den beiden Drehgelenken 14 und 15 und dem unteren Verbindungselementen 12 und 13 angeordnet.

Zwischen dem ersten Steg 21 und dem zweiten Steg 22 ist eine obere Tasche 24 angeordnet. Diese Tasche 24 besteht aus einem flexiblen Material und dient zur Aufnahme von Golfschlägerköpfen.

Zwischen dem zweiten Steg 22 und der unteren Querrahmenstange 9 ist eine untere Tasche 25 angeordnet, sie besteht ebenfalls aus einem flexiblen Material und dient auch zur Aufnahme von Golfschlägerköpfen.

Zwischen dem zweiten Steg 22 und der unteren Querrahmenstange 9 ist der dritte Steg 23 angeordnet.

Weiterhin verfügt der erfindungsgemässe Golf-Caddy 1 über eine Verspannung. Diese Verspannung besteht aus einer Griffstangen-Radverbindungselement-Verspannung 30.1 und 30.2, einer Erster-Steg-Radverbindungselement-Verspannung 31.1 und 31.2 und einer diagonalen Erster-Steg-Radverbindungselement-Verspannung 32.1, und 32.2. Diese Verspannungen können aus einem Metallseil, oder einem anderen geeigneten und insbesondere strapazierbarem Material bestehen.

Die Griffstangen-Radverbindungselement-Verspannung 30.1 verläuft von dem Ende der Griffstange 3, welches dem Haltegriff 4 gegenüber liegt, zu dem zweiten Radverbindungselement 17. Die Griffstangen-Radverbindungselement-Verspannung 30.2 verläuft von der gleichen Position an der Griffstange 3, zu dem ersten Radverbindungselement 16.

Weiterhin verläuft eine Erster-Steg-Radverbindungselement-Verspannung 31.1 von einem Bereich des ersten Steges 21 an dem er mit der ersten Rahmenstange 6 in Verbindung steht, zu dem zweiten Radverbindungselement 17. Ebenso, aber gegenüber, verläuft eine Erster-Steg-Radverbindungselement-Verspannung 31.2 von einem Bereich des ersten Steges 21 an dem er mit der zweiten Rahmenstange 7 in Verbindung steht zu dem ersten Radverbindungselement 16.

Ferner verläuft die diagonale Erster-Steg-Radverbindungselement-Verspannung 32.1 von einem Bereich des ersten Steges 21 an dem er mit der zweiten Rahmenstange 7 in Verbindung steht zu dem ersten Radverbindungselement 16.

Ebenso verläuft gegenüber eine diagonale Erster-Steg-Radverbindungselement-Verspannung 32.2 von einem Bereich des ersten Steges 21 an dem er mit der ersten Rahmenstange 6 in Verbindung steht zu dem zweiten Radverbindungselement 17.

Auf dem Rahmen 2 liegt mittig zwischen den beiden Drehgelenken 14 und 15 und den beiden oberen Verbindungselementen 10 und 11 auf der ersten Rahmenstange 6 und der zweiten Rahmenstange 7 eine Schlägerschaftklemme 33 auf. Die Schlägerschaftklemme 33 kann in diesem Ausführungsbeispiel sieben Golfschläger an ihrem Schaft aufnehmen. Die Schlägerschaftklemme 33 weist nebeneinander angeordnete flexible Schlaufen auf, zwischen welche die Schlägerschäfte geklemmt werden können.

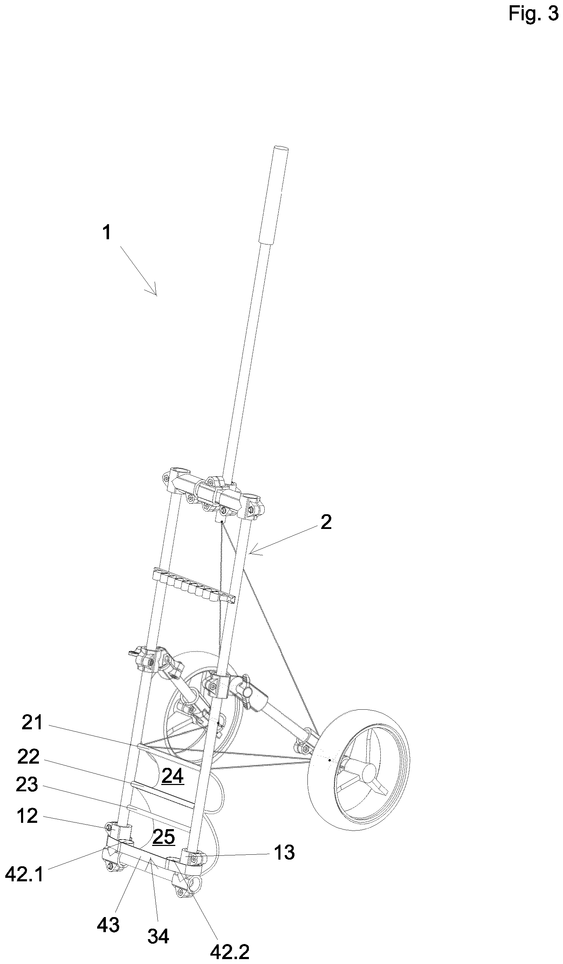

In Figur 3 ist ein erfindungsgemässer Golf-Caddy 1 dargestellt. Dieser verfügt im unteren Bereich des Rahmens 2 über eine Doppelerweiterung 34. Diese Doppelerweiterung 34 ist beidseits an dem ersten unteren Verbindungselement 12 und dem zweiten unteren Verbindungselement 13 angeordnet. Die Doppelerweiterung 34 ist daher parallel verlaufend zu der Querrahmenstange 9 angeordnet. Die Doppelerweiterung 34 verfügt über zwei becherförmige Aufnahmen 42.1 und 42.2, wobei jeweils eine Aufnahme 42.1, 42.2 an einer Innenseite des Rahmens 2 an dem ersten unteren Verbindungselement 12 bzw. dem zweiten unteren Verbindungselement 13 anliegen. In diese Aufnahmen 42.1 und 42.2 werden Griffstücke von Golfschlägern aufgenommen. Beide Aufnahmen 42.1 und 42.2 sind durch eine Brücke 43 miteinander verbunden. Diese Brücke 43 erlaubt es weitere Golfschläger mit ihren Griffstücken anzuordnen, wobei die Griffstücke der Golfschläger dann auf der unteren Querrahmenstange 9 aufliegen und dort durch die Brücke 43 gehalten werden.

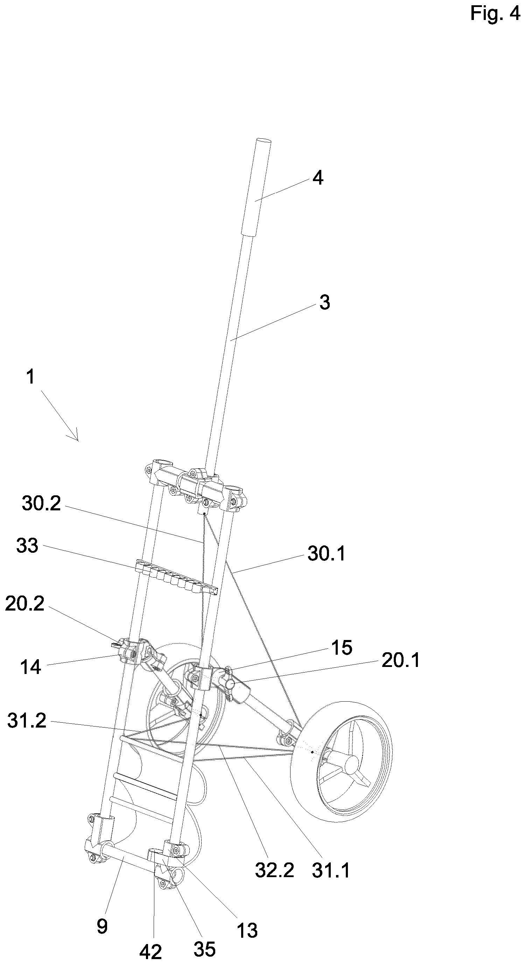

In Figur 4 ist ein Ausführungsbeispiel des erfindungsgemässen Golf-Caddys 1 dargestellt, wobei eine Erweiterung 35 an dem zweiten unteren Verbindungselement 13 angeordnet ist. Die Erweiterung verfügt über eine Aufnahme 42 für einen Golfschlägergriff.

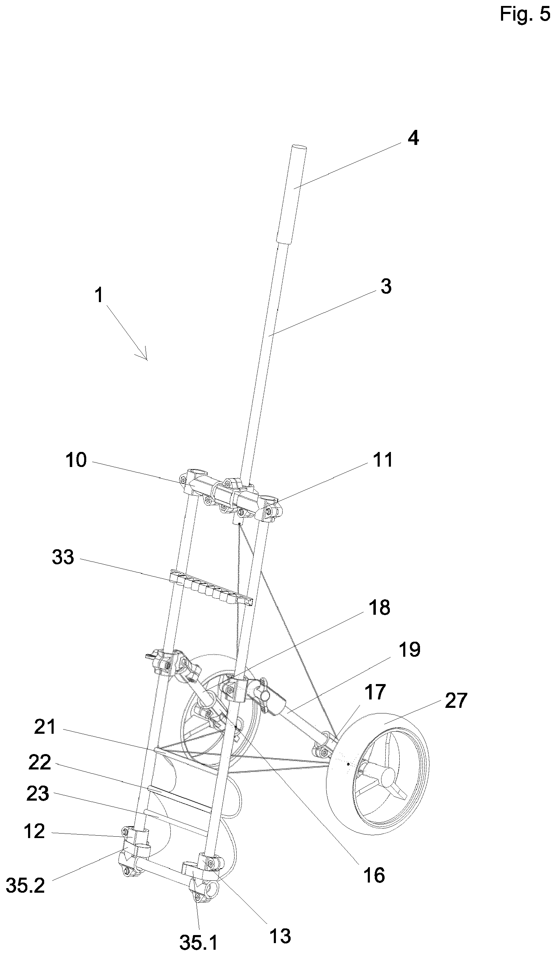

In Figur 5 ist ein Ausführungsbeispiel des erfindungsgemässen Golf-Caddys 1 dargestellt, wobei gegenüber der Erweiterung 35.1 an dem ersten unteren Verbindungselement 12 eine weitere Erweiterung 35.2 angeordnet ist.

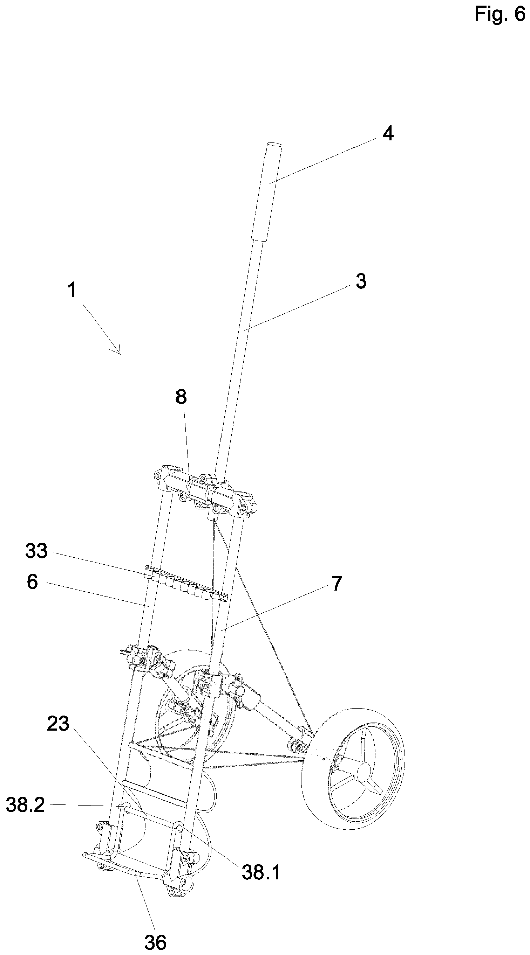

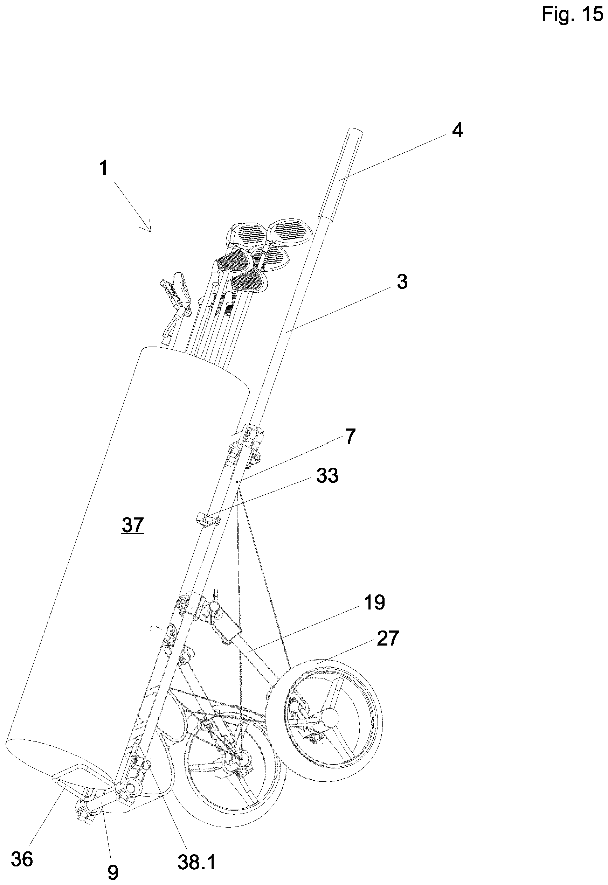

In Figur 6 und Figur 15 ist ein Ausführungsbeispiel des erfindungsgemässen Golf-Caddys 1 dargestellt. In dieser Ausführungsform ist an dem dritten Steg 23 ein Einhängeauflagesteg 36 angeordnet. Der Einhängeauflagesteg 36 wird über zwei Haken 38.1 und 38.2 an dem dritten Steg 23 eingehängt und kann nach Bedarf auch wieder ohne weiteres ausgehängt werden. Der Einhängeauflagesteg 36 dient dazu -falls es notwendig sein sollte mehr als sieben Golfschläger mit zu nehmen-, dass auch eine Golfschlägertasche 37 auf dem erfindungsgemässen Golf-Caddy 1 transportiert werden kann. In Figur 15 ist ersichtlich, wie die Golfschlägertasche 37 auf dem Einhängeauflagesteg angeordnet wird.

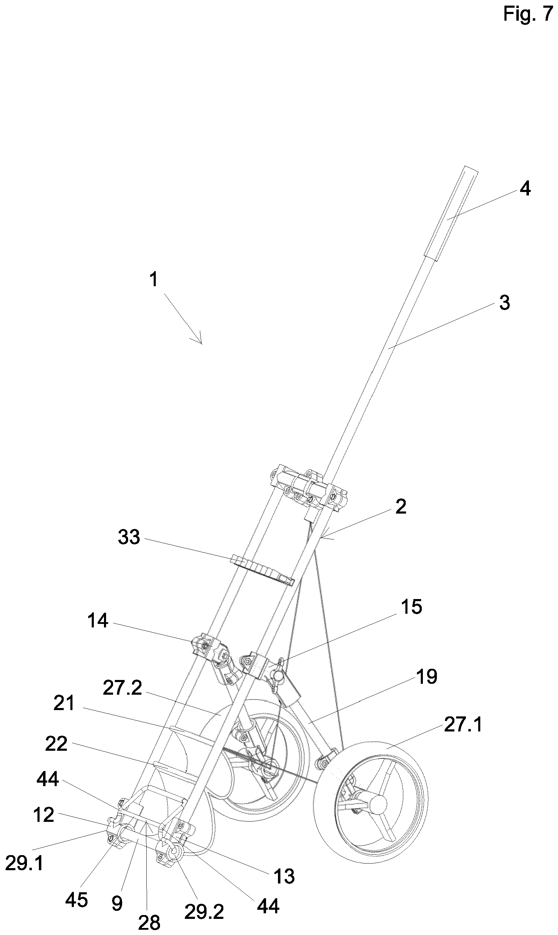

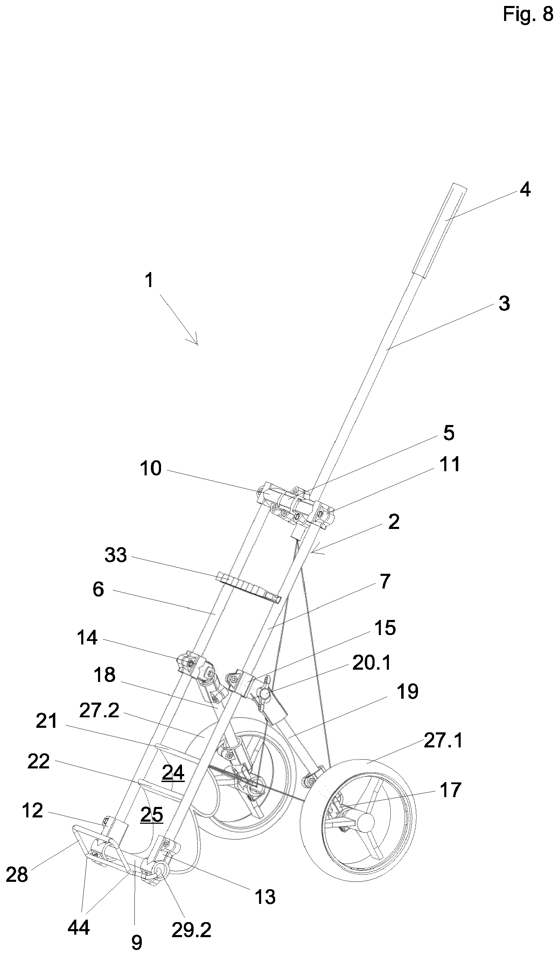

In Figur 7 und Figur 8 ist ein Ausführungsbeispiel des erfindungsgemässen Golf-Caddys 1 dargestellt, wobei an dem ersten unteren Verbindungselement 12 ein Klappscharnier 29.1 und an dem zweiten unteren Verbindungelement 13 ein Klappscharnier 29.2 angeordnet ist. Über diese beiden Klappscharniere 29.1 und 29.2 ist ein Klappauflagesteg 28 am Rahmen 2 angeordnet. Dieser Klappauflagesteg 28 ist in der Figur 7 in einer eingeklappten Position und in der Figur 8 in einer ausgeklappten Position dargestellt. Der derart mit dem Rahmen 2 verbundene und ein- und ausklappbare Klappauflagesteg 28 dient der bedarfsweisen Aufnahme der Golfschlägertasche 37. In der ausgeklappten Position bildet der Klappauflagesteg 28 eine in seinen Umrissen schaufelförmige Ausformung, wobei eine beidseitige Anwinklung 44 in Richtung der Griffstange 3 im Bereich einer Querstrebe 45 diese Ausformung bildet.

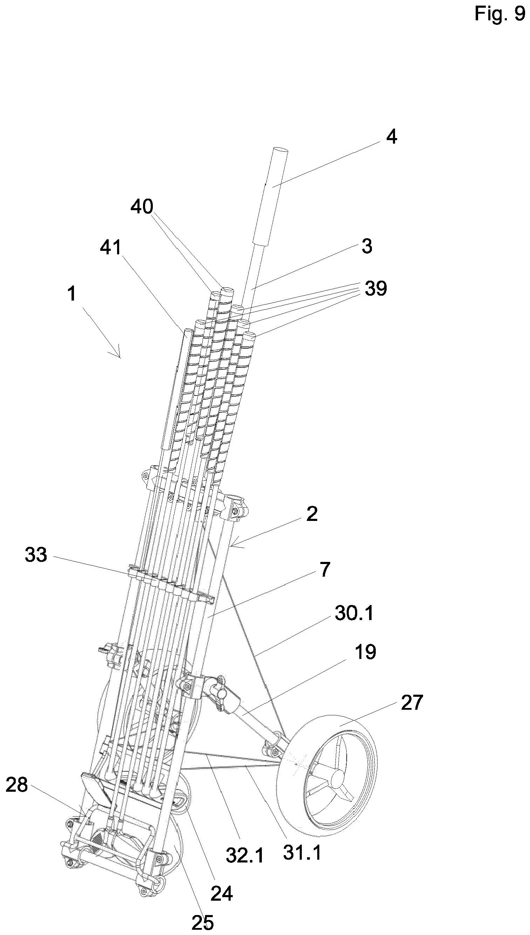

In Figur 9 ist der erfindungsgemässe Golf-Caddy 1 aus der Figur 7 mit dem sich in der eingeklappten Position befindlichen Klappauflagesteg 28 dargestellt, wobei in der Figur 9 zudem sieben Golfschläger, nämlich vier Eisen 39, zwei Driver 40 und ein Putter 41 auf dem Golf-Caddy angeordnet sind. Alle Schläger sind an ihrem Schlägerschaft mit der Schlägerschaftklemme 33 reversibel verbunden. Dabei sind die Eisen 39 mit ihrem Schlägerkopf in der oberen Tasche 24 und die längeren Driver 40 mit ihrem Schlägerkopf in der unteren Tasche 25 positioniert. Damit die Driver 40 in die untere Tasche 25 aufgenommen werden können, werden sie durch den eingeklappten Klappauflagesteg 28 hindurchgeführt, wobei durch die Querstrebe 45 eine zusätzliche Fixierung des dort positionierten Golfschlägers erfolgt. Der Putter 41 liegt mit seinem Schlägerkopf auf dem sich in der eingeklappten Position befindlichen Klappauflagesteg 28 auf.

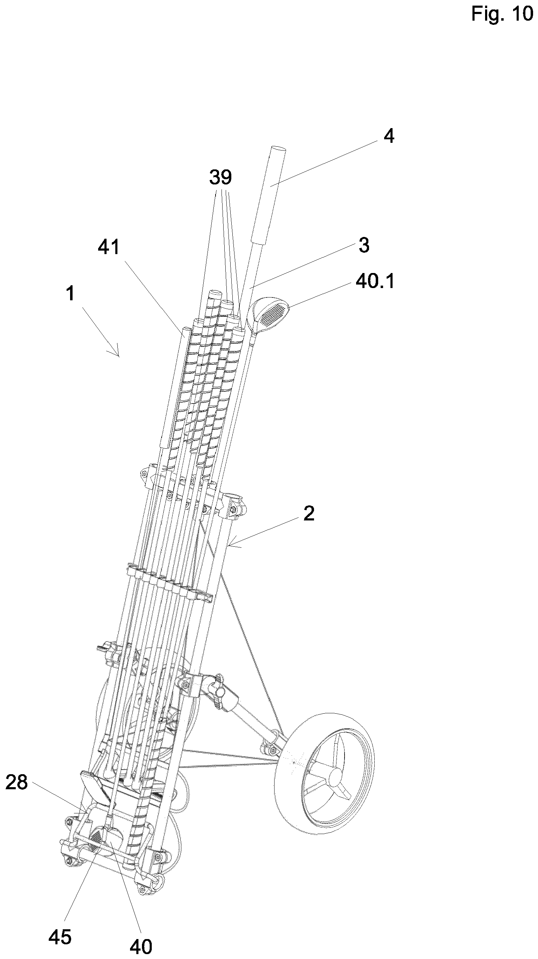

In Figur 10 ist, mit einem Unterschied, die Situation mit dem in der Figur 8 dargestellten erfindungsgemässen Golf-Caddys 1 dargestellt. Einziger Unterschied ist, dass einer der Driver 40.1 mit dem Schlägerkopf nicht in einer der beiden Taschen 24 oder 25 positioniert ist, sondern der Schlägerkopf in Richtung der Griffstange 3 und des Handgriffs 4 ausgerichtet ist. Dabei wird dieser Driver 40.1 an seinem Schlägerschaft durch die Schlägerschaftklemme 33 und an dem Schlägergriff durch die Auflage auf der unteren Querrahmenstange 9 in Verbindung mit dem eingeklappten Klappauflagesteg 28 und dessen Querstrebe 45 gehalten.

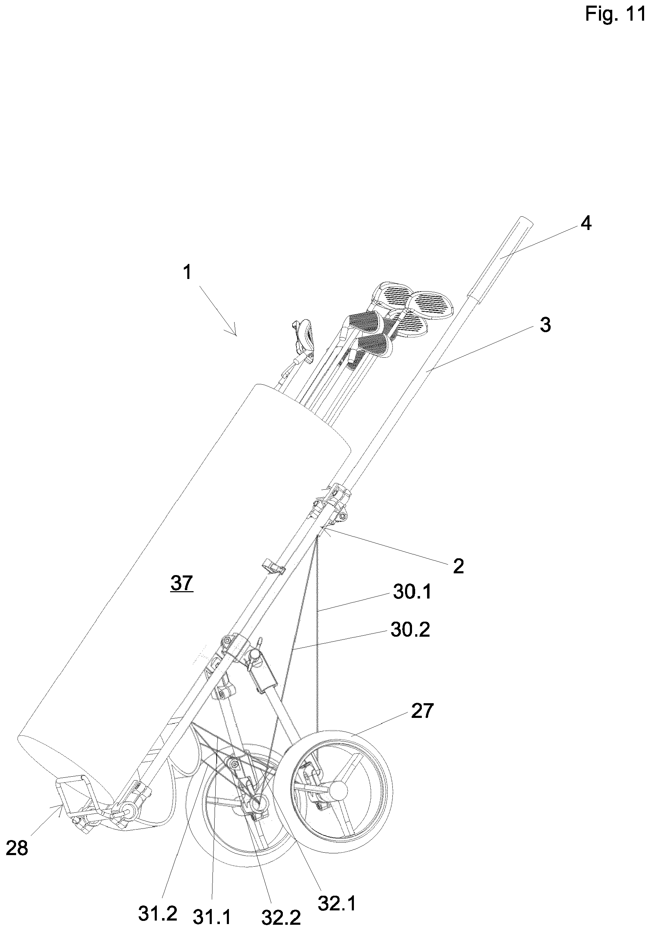

In Figur 11 ist der erfindungsgemässe Golf-Caddy 1 dargestellt der in Figur 8 abgebildet ist, wobei der Klappauflagesteg 28 in ausgeklappter Position die Golfschlägertasche 37 aufnimmt.

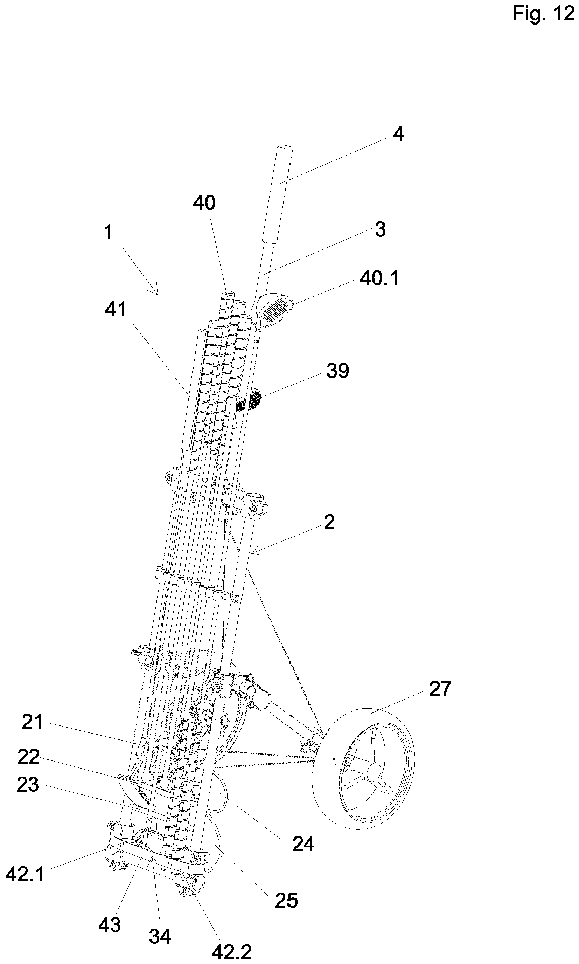

In Figur 12 ist der erfindungsgemässe Golf-Caddy 1 dargestellt der in Figur 3 abgebildet ist, wobei in die Aufnahme 42.2 der Doppelerweiterung 34 der Schlägergriff eines Drivers 40.1 aufgenommen ist und dieser entsprechend mit seinem Schlägerkopf in Richtung der ausgefahrenen Griffstange 3 ausgerichtet ist. Ebenso ausgerichtet ist ein daneben angeordnetes Eisen 39, welches mit dem Schlägergriff auf der unteren Querrahmenstange 9 aufliegt und durch die Brücke 43 dort stabilisiert wird. Natürlich werden alle abgebildeten Golfschläger durch die Schlägerschaftklemme 33 an ihren jeweiligen Schlägerschäften gehalten.

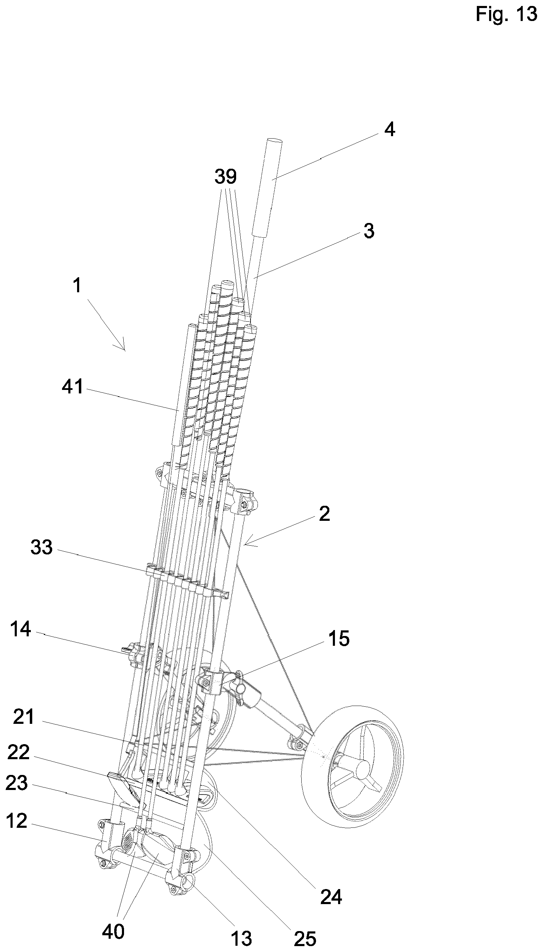

In Figur 13 ist der erfindungsgemässe Golf-Caddy 1 aus Figur 1 dargestellt, wobei dieser hier mit sieben Golfschlägern, nämlich 4 Eisen 39, 2 Drivern 40 und einem Putter 41 bestückt ist. Die Eisen 39 sind mit Ihrem Schlägerkopf in der obere Tasche 24 angeordnet, die Driver 40 sind mit Ihren Schlägerkopf in der unteren Tasche 25 angeordnet. Der Putter 41 liegt mit seinem Schlägerkopf auf dem dritten Steg 23 auf. Natürlich werden alle abgebildeten Golfschläger durch die Schlägerschaftklemme 33 an ihren jeweiligen Schlägerschäften gehalten.

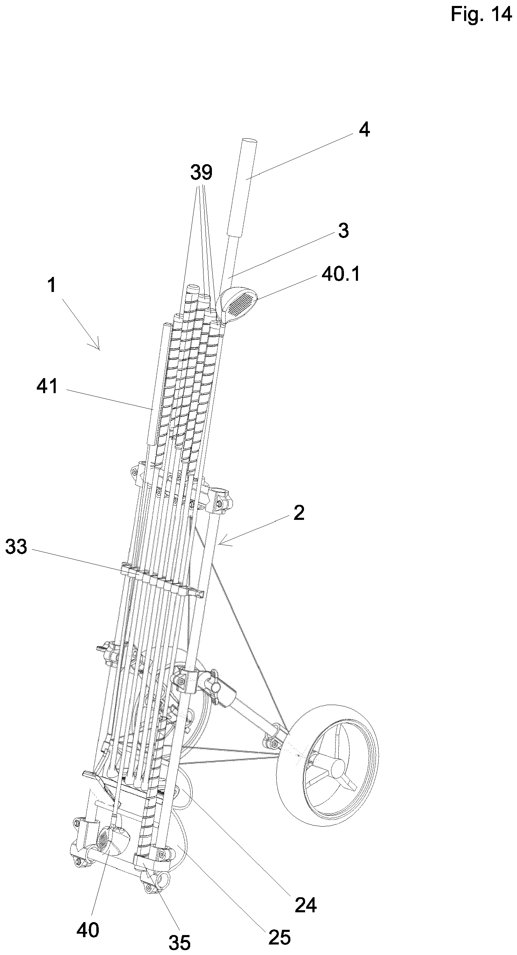

In Figur 14 ist der erfindungsgemässe Golf-Caddy 1 aus Figur 4 dargestellt, wobei dieser hier ebenfalls mit sieben Golfschlägern, nämlich 4 Eisen 39, 2 Drivern 40 und 40.1 und einem Putter 41 bestückt ist. In die Erweiterung 35 ist der Driver 40.1 mit dem Schlägergriff aufgenommen, so dass der Schlägerkopf des Drivers 40.1 in Richtung der Griffstange und des Handgriffes 4 ausgerichtet ist. Natürlich werden alle abgebildeten Golfschläger durch die Schlägerschaftklemme 33 an ihren jeweiligen Schlägerschäften gehalten.

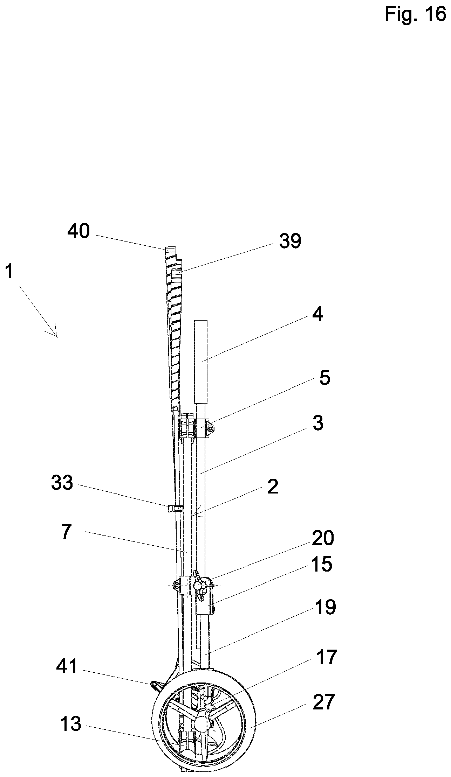

In den Figuren 16 bis 19 ist der erfindungsgemässen Golf-Caddy 1 in zusammengeklappten Positionen ersichtlich.

In der Figur 16 sind die Radstangen 18 und 19 mit den Rädern 27 über das jeweilige Drehgelenk 14 bzw. 15 an den Rahmen 2 angelegt worden. Dabei liegt der Rahmen 2 in dem Bereich der ersten Tasche 24 und der zweiten Tasche 25 in dieser zusammengeklappten Position zwischen den beiden Rädern 27.

Über ein Anziehen des Schraubenelements 20, über welches jedes der beiden Drehgelenke 14 und 15 verfügt, kann diese zusammengeklappte Position beibehalten bzw. fixiert werden, so dass der erfindungsgemässe Golf-Caddy 1, auch mit den Schlägern beladen, aufrecht steht. Die beiden unteren Verbindungselemente 12 und 13 sowie die untere Querrahmenstange 9 sorgen neben den beiden Rädern 27 für Standstabilität.

Weiterhin ist die Griffstange 3 in einer eingefahrenen Position ersichtlich, wobei sich die eingefahrene Position dadurch kennzeichnet, dass der Handgriff 4 im Bereich des Rahmens 2 bzw. der Griffstangenhalterung 5 positioniert ist. Die Position der Griffstange 3 wird über die Griffstangenhalterung 5 bestimmt und eingestellt. Diese verfügt dazu ebenfalls über ein Schraubenelement, welches jedoch in den Abbildungen nicht dargestellt ist. Dadurch, dass die Griffstangenhalterung 5 die Griffstange 3 umgreift, kann über dieses Schraubenelement die Position der Griffstange 3 durch Lösen und anziehen dieses Schraubenelements bestimmt werden.

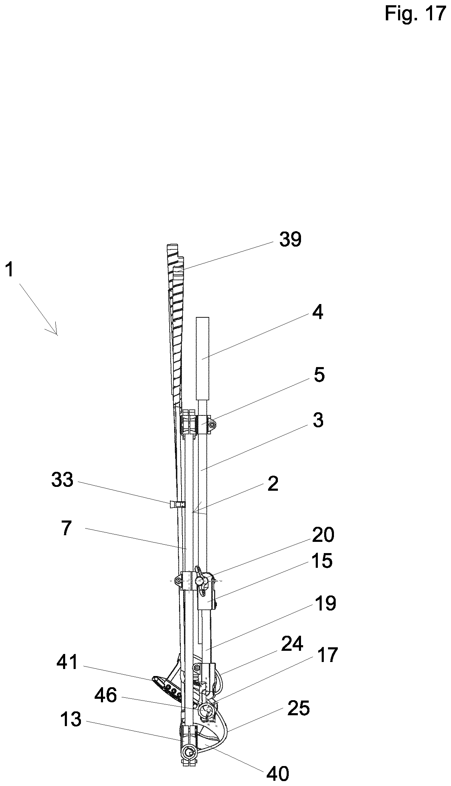

In Figur 17 ist der erfindungsgemässen Golf-Caddy 1 aus der Figur 16 ebenfalls in einer eingeklappten Position ersichtlich. In der Figur 17 sind jedoch die beiden Räder 27, die über das erste Radverbindungselement 16 bzw. das zweite Radverbindungselement 17 mit der ersten bzw. zweiten Radstange 18, 19 verbunden sind, dort nicht angeordnet.

Über einen Klickmechanismus 46, ein solcher ist sowohl an dem ersten Radverbindungselement 16 als auch an dem zweite Radverbindungselement 17 angeordnet, können die Räder 27 per Knopfdruck von dem jeweiligen Radverbindungselement 16, 17 gelöst werden. Durch einfaches aufsetzen der Räder 27 auf eines der Radverbindungselemente 16, 17 rasten diese dann dort wieder ein. Die Räder 27 können daher nach Bedarf über den jeweiligen Klickmechanismus 46 von dem Radverbindungselement 16, 17 entfernt und wieder angefügt werden.

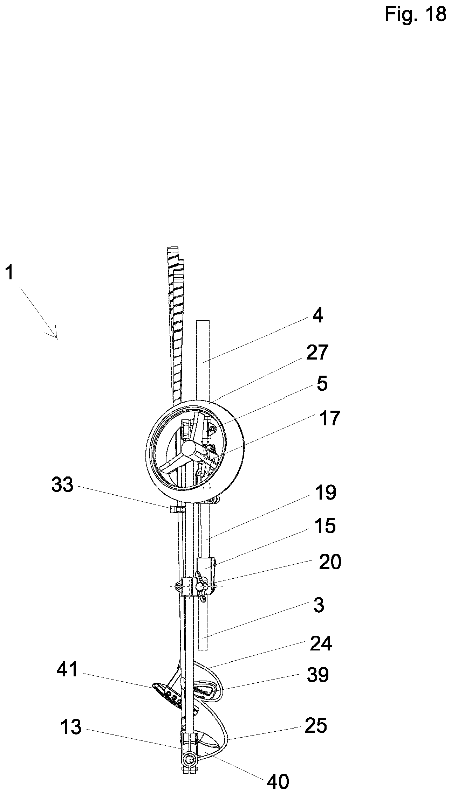

In Figur 18 ist der erfindungsgemässe Golf-Caddy 1 in einer weiteren zusammengeklappten Position ersichtlich. Im Gegensatz zu der zusammengeklappten Position, die in der Figur 16 dargestellt ist, ist in der Figur 17 eine andere, weitere zusammengeklappte Position ersichtlich. Dabei sind die Radstangen 18 und 19 mit den Rädern 27 über das jeweilige Drehgelenk 14 bzw. 15 zwar ebenfalls an den Rahmen 2 angelegt worden, jedoch liegt der Rahmen 2 in dieser zusammengeklappten Position in dem Bereich der Griffstangenhalterung 5 und der oberen Querrahmenstange 8 zwischen den beiden Rädern 27. Diese zusammengeklappte Position ist insbesondere für eine liegende Positionierung des erfindungsgemässen Golf-Caddy 1 geeignet.

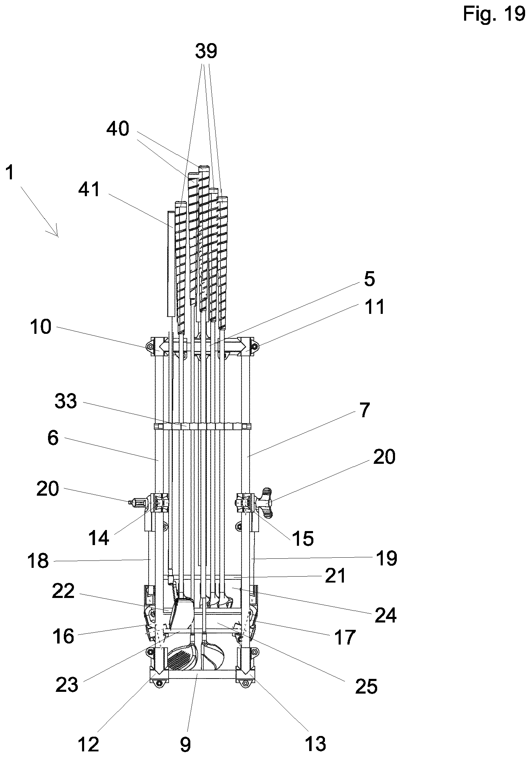

In Figur 19 ist der erfindungsgemässe Golf-Caddy 1 mit abgenommenen Rädern nach der Figur 17 dargestellt. Hier ist der erfindungsgemässe Golf-Caddy 1 jedoch in einer frontalen Ansicht dargestellt. Es ist ersichtlich, dass die erste und zweite Radstange 18, 19 an den Rahmen 2 über das erste Radverbindungselement 16 bzw. das zweite Radverbindungselement 17 an den Rahmen 2 angelegt sind. Dabei befinden sich die Radverbindungselemente 16 und 17 im Bereich der ersten Tasche 24 und der zweiten Tasche 25. Auch hier sind die beiden Schraubenelemente 20 der jeweiligen Drehgelenk 14 bzw. 15 ersichtlich. Die erste und zweite Radstange 18, 19 sind über die beiden jeweiligen Drehgelenk 14 bzw. 15 mit dem Rahmen 2 verbunden und ihre Position kann über diese bestimmt und eingestellt werden.

Bezugnehmend auf die Figuren 1 bis 19 erklärt sich die Funktionsweise der erfindungsgemässen Vorrichtung folgendermassen:
Der erfindungsgemässe Golf-Caddy 1 ist durch seine Verspannung mittels der Griffstangen-Radverbindungselement-Verspannung 30, der Erster-Steg-Radverbindungselement-Verspannung 31 und der diagonalen Erster-Steg-Radverbindungselement-Verspannung 32 in Verbindung mit dem ersten und zweiten Drehgelenk 14 und15 für die erste und zweite Radstange 18 und 19, besonders leicht ein- und ausklappbar. Wird die Griffstange 3 aus einer eingefahrenen Position in der Griffstangenhalterung 5 in eine ausgefahrene Position bewegt, werden die an einem unteren Ende der Griffstange 3 angeordneten und mit den Radverbindungselementen verbundenen Griffstangen-Radverbindungselement-Verspannung 30.1 und 30.1 gespannt. Diese Spannung führt dazu, dass die beiden Radstangen 18 und 19 mit den Rädern 27.1 und 27.2 von dem Rahmen 2 abgespreizt werden. Dies ermöglichen die beiden Drehgelenke 14 und 15, welche in bevorzugten Ausführungsformen auch in der ausgeklappten als auch in der eingeklappten Position mittels des Schraubenelements 20 fixiert werden können, so dass die beiden Radstangen 18 und 19 mit den Rädern 27.1, 27.2 in der eingenommenen Positionen verbleiben.

Die Schlägerschaftklemme 33 erlaubt es Golfschläger über die Schlägerschäfte zwischen die nebeneinander angeordnete flexible Schlaufen einzuklemmen, wodurch eine zuverlässige aber reversible Fixierung erfolgt. Die Schlägerschaftklemme 33 hat vorzugsweise acht flexible Schlaufen, so dass sieben Golfschläger aufgenommen werden können. Natürlich sind auch weitere Ausführungsformen des erfindungsgemässen Golf-Caddys 1 vorgesehen, bei denen die Schlägerschaftklemme 33 über mehr als acht flexibel Schlaufen verfügt, so dass mehr als sieben Golfschläger aufgenommen werden können. Vorzugsweise ist in diesen Fällen der Rahmen 2 auch breiter ausgeformt, wobei die obere und die untere Querstange 8 und 9, sowie der erste Steg 21, der zweite Steg 22 und der dritte Steg 23 entsprechend länger ausgebildet sind.

Die über die Schlägerschaftklemme 33 aufgenommenen Golfschläger werden mit ihren Schlägerköpfen in den beiden Taschen, der oberen Tasche 24 und der unteren Tasche 25 positioniert. Eine Zuordnung der Schläger richtet sich dabei insbesondere nach der jeweiligen Schlägerlänge und der Größe der Schlägerköpfe. Schlägerköpfe langer Golfschläger, zu denen insbesondere Driver gehören, werden in der unteren Tasche 25 angeordnet, kürzere Schläger, wie Eisen vorzugsweise in der oberen Tasche 24.

Über die Doppelerweiterung sowie eine oder zwei Erweiterungen können zusätzlich Golfschläger oder beispielsweise Ballrückholer von dem erfindungsgemässen Golf-Caddy 1 aufgenommen werden, wobei die Schlägerköpfe in Richtung des Handgriffes 4 ausgerichtet sind und nicht in einer der beiden Taschen 24 oder 25 angeordnet werden.

Soll anstelle einzelner Golfschläger eine Golfschlägertasche mit dem erfindungsgemässen Golf-Caddy 1 transportiert werden kann zur Aufnahme der Golfschlägertasche 37 bei einer Ausführungsform der Klappauflagesteg 28 herausgeklappt werden. In einer anderen Ausführungsform wird der Einhängeauflagesteg 36 über seine Haken 38 an dem dritten Steg 23 eingehängt.

Obwohl nur einige bevorzugte Ausführungsbeispiele der Erfindung beschrieben und dargestellt wurden, ist es offensichtlich, dass der Fachmann zahlreiche Modifikationen hinzufügen kann, ohne Wesen und Umfang der Erfindung zu verlassen. Insbesondere kann über die Größe des Rahmens 2 und der Schlägerschaftklemme die Anzahl der maximal aufnehmbaren Schläger erhöht werden.

**Bezugszeichenliste**

| | | | |
|---|---|---|---|
| 1 | Golf-Caddy | 30.1, 30.2 | Griffstangen-Radverbindungselement-Verspannung |
| 2 | Rahmen | 31.1, 31.2 | Erster-Steg-Radverbindungselement-Verspannung |
| 3 | Griffstange | 32.1, 32.2 | diagonalen Erster-Steg-Radverbindungselement-Verspannung |
| 4 | Handgriff | 33 | Schlägerschaftklemme |
| 5 | Griffstangenhalterung | 34 | Doppelerweiterung |
| 6 | erste Längsrahmenstange | 35 | Erweiterung |
| 7 | zweite Längsrahmenstange | 36 | Einhängeauflagesteg |
| 8 | obere Querrahmenstange | 37 | Golfschlägertasche |
| 9 | untere Querrahmenstange | 38 | Haken |
| 10 | erstes oberes Verbindungselement | 39 | Eisen |
| 11 | zweites oberes Verbindungselement | 40 | Driver |
| 12 | erstes unteres Verbindungselement | 41 | Putter |
| 13 | zweites unteres Verbindungselement | 43 | Brücke |
| 14 | erstes Drehgelenk | 44 | Anwiklung |
| 15 | zweites Drehgelenk | 45 | Querstrebe |
| 16 | erstes Radverbindungselement | 46 | Klickmechanismus |
| 17 | zweites Radverbindungselement | | |
| 18 | erste Radstange | | |
| 19 | zweite Radstange | | |
| 20 | Schraubenelement | | |
| 21 | erster Steg | | |
| 22 | zweiter Steg | | |
| 23 | dritter Steg | | |
| 24 | obere Tasche | | |
| 25 | untere Tasche | | |
| 26 | erstes Rad | | |
| 27 | zweites Rad | | |
| 28 | Klappauflagesteg | | |
| 29 | Klappscharnier | | |

## Patentansprüche

1. Golf-Caddy (1) mit zwei Rädern (27) und einer Griffstange (3) mit Handgriff (4) für den Transport von Eisen (39), Drivern (40), Puttern (41), sowie weiteren zum Golfspiel benötigter Ausrüstung oder einer Golfschlägertasche (37),
**dadurch gekennzeichnet,**
**dass** ein rechteckiger Rahmen (2) eine Griffstangenhalterung (5) mit einem Schraubelement für die Griffstange(3), eine Schlägerschaftklemme (33), eine obere Tasche (24), eine untere Tasche (25) sowie einen Klappauflagesteg (28) oder ein Einhängeauflagesteg (36) umfasst sind.

2. Golf-Caddy (1) nach Anspruch 1, **dadurch gekennzeichnet, dass** der Klappauflagesteg (28) eine Anwinklung (44) und eine Querstrebe (45) umfasst und über ein erstes Klappscharnier (29.1), welches in einem ersten unteren Verbindungselement (12) angeordnet ist und über eine zweites Klappscharnier (29.2), welches in einem zweiten unteren Verbindungselement (13) angeordnet ist, klappbeweglich mit dem Rahmen (2) verbunden ist.

3. Golf-Caddy (1) nach Anspruch 1, **dadurch gekennzeichnet, dass** der Einhängeauflagesteg (36) über Haken (38) an einem dritten Steg (23) des Rahmens (2) einhängbar ist.

4. Golf-Caddy (1) nach Anspruch 1, **dadurch gekennzeichnet, dass** ein Griffstangen-Radverbindungselement-Verspannung (30.1; 30.2), eine Erster-Steg-Radverbindungselement-Verspannung (31.1; 31.2) und eine diagonale Erster-Steg-Radverbindungselement-Verspannung (32.1; 32.2) umfasst sind.

5. Golf-Caddy (1) nach Anspruch 1, **dadurch gekennzeichnet, dass** an dem Rahmen (2) ein erstes Drehgelenk (14) und ein zweites Drehgelenk (15) angeordnet ist, wobei das erstes Drehgelenk (14) eine Verbindung mit einer ersten Radstange (18) und das zweite Drehgelenk(15) eine Verbindung mit einer zweiten Radstange (19) herstellt und wobei das erstes Drehgelenk (14) und das zweites Drehgelenk (15) jeweils ein Schraubelement (20) umfassen.

6. Golf-Caddy (1) nach Anspruch 1, **dadurch gekennzeichnet, dass** ein erstes Rad (27) über ein erstes Radverbindungselement (16) mit der ersten Radstange (18) und ein zweites Rad (27) über ein zweites Radverbindungselement (17) mit der zweiten Radstange (19) verbunden ist, wobei das erstes Radverbindungselement (16) und das zweites Radverbindungselement (17) jeweils einen Klickmechanismus (43) umfassen.

7. Golf-Caddy (1) nach Anspruch 1, **dadurch gekennzeichnet, dass** der Rahmen (2) einen Doppelerweiterung (34) oder eine erste Erweiterung (35.1) und/oder eine zweite Erweiterung (35.2) umfasst.

8. Golf-Caddy (1) nach Anspruch 1, **dadurch gekennzeichnet, dass** die obere Tasche (24) an einem ersten Steg (21) und an einem zweiten Steg (22) angeordnet ist und die untere Tasche (25) an dem zweiten Steg (22) und einer unteren Querrahmenstange (9) angeordnet ist und wobei der dritte Steg (23) freiliegend ist.

9. Golf-Caddy (1) nach einem der vorherigen Ansprüche, **dadurch gekennzeichnet, dass** die Räder (27) über den Klickmechanismus (43) von oder mit dem ersten Radverbindungselement (16) und/oder dem zweiten Radverbindungselement (17) trennbar oder verbindbar sind.

10. Golf-Caddy (1) nach einem der vorherigen Ansprüche, **dadurch gekennzeichnet, dass** die Griffstange (3) über die Griffstangenhalterung (5) teleskopierbar und an gewünschter Position fixierbar ist.
